# EUROPÄISCHE PATENTSCHRIFT

(11) **EP 3 578 300 B1**
(45) Veröffentlichungstag und Bekanntmachung des Hinweises auf die Patenterteilung: **30.08.2023**
(21) Anmeldenummer: 19177831.5
(22) Anmeldetag: 03.06.2019
(51) Int. Cl.: B24D 5/06, B24D 5/10, B24D 18/00, B24D 3/08

(54) **DIAMANTWERKZEUG UND VERFAHREN ZUR HERSTELLUNG EINES DIAMANTWERKZEUGS**
DIAMOND TOOL AND METHOD FOR PRODUCING SAME
OUTIL DIAMANT ET PROCÉDÉ DE FABRICATION D'UN OUTIL DIAMANT

(30) Priorität: 07.06.2018 DE 102018113613
(43) Veröffentlichungstag der Anmeldung: 11.12.2019
(73) Patentinhaber: SCHOTT Diamantwerkzeuge GmbH, 37627 Stadtoldendorf (DE)
(72) Erfinder: Lein, Burghard, 37619 Kirchbrak (DE); Kleine, Friedhelm, 37603 Holzminden (DE)
(74) Vertreter: Wolf, Gerhard

(56) Entgegenhaltungen:
- WO-A1-83/02553
- WO-A1-2017/147035
- DE-A1-102005 026 474
- GB-A- 1 499 992
- JP-A- H03 208 510
- US-A- 3 243 924
- US-A- 3 785 938
- US-A1- 2006 251 482
- US-A1- 2013 022 421

## Beschreibung

Die Erfindung betrifft ein Diamantwerkzeug sowie ein Verfahren zum Herstellen eines Diamantwerkzeugs.

Diamantwerkzeuge sind grundsätzlich bekannt. Insbesondere sind als Hohlfräser ausgebildete Diamantfräser bekannt, die eine Werkzeugkrone mit einer stirnseitigen Ausnehmung aufweisen, die umfangsseitig durch einen kreisringförmigen Werkzeugkronenabschnitt begrenzt ist.

Die Werkzeugkronen sind häufig galvanisch besetzte Werkzeugkronen, bei denen eine Schicht aus einem mit Diamanten durchsetzten Metall, insbesondere mit Diamanten durchsetzten Nickel, auf einen Träger aufgebracht wird. Um eine derartige Werkzeugkrone mit einem aus Hartmetall bestehenden Werkzeugschaft zu verbinden, sind zwei Lotstellen nötig, und zwar eine Hartlotstelle, mittels der ein Stahlkörper an dem Werkzeugschaft fixiert wird und eine Weichlotstelle, mittels der die galvanisch mit Diamanten besetzte Werkzeugkrone an dem Stahlkörper fixiert wird.

Eine derartige Herstellung ist zum einen aufwendig, zum anderen aufgrund der zwei Lötstellen mechanisch anfällig. Auch können die Materialeigenschaften des Hartmetalls des Werkzeugschafts durch die beim Hartlöten auftretende thermische Belastung negativ beeinflusst werden, so dass der Werkzeugschaft brüchig wird und/oder Oberflächenrisse aufweist.

Die Druckschrift US 2013/0022421 A1 offenbart einen Bohraufsatz. Der Bohraufsatz weist ein durch einen Galvanisierungsprozess aufgebrachtes nickelhaltiges Bonding-Material auf, in dem Diamantpartikel eingebracht sein können. Die Werkzeugkrone weist stirnseitig eine Ausnehmung auf, so dass die Werkzeugkrone im Bereich des freien Endes im Querschnitt kreisringförmig ausgebildet ist.

Dokument WO 2017/147035 A1 offenbart ein abrasives Werkzeug mit einem Dämpfungskörper.

Dokument JP H03 208510 A offenbart einen Kernbohrer.

Dokument GB 1 499 992 A offenbart einen Bohreinsatz.

Die Druckschrift US 3,785,938 A offenbart ein Verfahren zur Herstellung von Schleifmitteln.

Zuletzt offenbart die Druckschrift WO 83/02553 A1 ein chirurgisches Knochenschleifelement mit einem Hohlzylinder, der freiendseitig einen Diamanten enthaltenden Schleifbelag aufweist.

Ausgehend hiervon ist es Aufgabe der Erfindung, ein Diamantwerkzeug anzugeben, das zum einen einfach herstellbar und für physikalische Prozesse unanfälliger ist, zum anderen eine hohe mechanische Stabilität aufweist.

Die Aufgabe wird durch ein Diamantwerkzeug gemäß den Merkmalen des unabhängigen Patentanspruchs 1 gelöst. Bevorzugte Ausführungsformen sind Gegenstand der Unteransprüche. Ein Verfahren zur Herstellung eines Diamantwerkzeugs ist Gegenstand des nebengeordneten Patentanspruchs 9.

Die Erfindung bezieht sich auf ein Diamantwerkzeug. Das Diamantwerkzeug ist insbesondere zur Bearbeitung von spröden Materialien, insbesondere Glas, mittels Werkzeugmaschinen ausgebildet. Das Diamantwerkzeug umfasst einen Werkzeugschaft, insbesondere einen Hartmetall-Werkzeugschaft, und eine auf dem Werkzeugschaft fixierte Werkzeugkrone, die durch eine zumindest abschnittsweise mit Diamanten durchsetzte Materialschicht gebildet wird. Insbesondere kann ein vorderer Abschnitt der Werkzeugkrone mit Diamanten durchsetzt sein und ein hinterer Teil der Werkzeugkrone, der der Fixierung der Werkzeugkrone am Werkzeugschaft dient, keine Diamanten aufweisen. Die zumindest abschnittsweise mit Diamanten durchsetzte Materialschicht ist unmittelbar mit dem Werkzeugschaft stoffschlüssig verbunden, d.h. erstreckt sich zumindest abschnittsweise auf den Werkzeugschaft, um mit diesem einen Stoffschluss herzustellen. Der Stoffschluss kann insbesondere durch ein galvanisches Aufwachsen der Materialschicht zumindest abschnittsweise auf dem Werkzeugschaft erreicht werden. Damit ist die Werkzeugkrone ohne Lötstelle an dem Werkzeugschaft fixiert. Die Werkzeugkrone weist stirnseitig eine Ausnehmung auf, so dass die Werkzeugkrone im Bereich des freien Endes im Querschnitt kreisringförmig ausgebildet ist.

Der technische Vorteil des Diamantwerkzeugs besteht darin, dass durch die unmittelbare stoffschlüssige Anbindung der Werkzeugkrone an den Werkzeugschaft ein mechanisch hochbelastbares Diamantwerkzeug geschaffen wird, das einfach herstellbar ist und eine hohe Passivschwingungsdämpfung und eine vergleichsweise hohe Rundlaufgenauigkeit aufweist. Die stirnseitige Ausnehmung ermöglicht ein Eintauchen des Diamantwerkzeugs in das zu bearbeitende Material in axialer Richtung, da durch die stirnseitige Kreisringform der Werkzeugkrone kein unbewegter oder nur gering bewegter Werkzeugkronenbereich mit dem zu bearbeitenden Material im Eingriff ist.

Erfindungsgemäß bildet die Werkzeugkrone einen Hohlfräser. Ein freiendseitiger Abschnitt der Werkzeugkrone ist sacklochartig (abgesehen von einer eventuell vorhandenen Axialbohrung zur Zuführung von Kühlfluid) ausgebildet. Der sacklochartig ausgebildete Abschnitt der Werkzeugkrone besteht vollständig aus einem galvanisch aufgewachsenen Nickel-Diamant-Material und bildet den Abschnitt der Werkzeugkrone, mittels dem die Materialbearbeitung (z.B. Bohren oder Fräsen) erfolgt. Den Boden der sacklochartigen Werkzeugkrone bildet vorzugsweise der Werkzeugschaft.

Gemäß einer Ausführungsform steht die Werkzeugkrone zumindest abschnittsweise freiendseitig über den Werkzeugschaft über. Insbesondere sorgt ein erster Abschnitt der Werkzeugkrone für eine unmittelbare, stoffschlüssige Anbindung der Werkzeugkrone an den Werkzeugschaft, und ein zweiter Abschnitt der Werkzeugkrone, der freiendseitig über den Werkzeugschaft übersteht, bildet einen Werkzeugabschnitt, mittels dem die Materialbearbeitung erfolgt und der mit Diamanten durchsetzt ist. Dadurch wird ein flexibel einsetzbares, mechanisch sehr stabiles Diamantwerkzeug erreicht.

Gemäß einer Ausführungsform ist die zumindest abschnittsweise mit Diamanten durchsetzte Materialschicht eine Diamanten enthaltende Nickelschicht oder eine Materialschicht, die zumindest anteilig Nickel enthält. Die Verwendung einer mit Diamanten durchsetzten Nickelschicht ist vorteilhaft, da diese eine hohe mechanische Festigkeit aufweist und sich damit zur Bearbeitung von spröden Materialien, beispielsweise Glas, sehr gut eignet.

Gemäß einer Ausführungsform ist die zumindest abschnittsweise mit Diamanten durchsetzte Materialschicht eine durch ein Galvanikverfahren aufgebrachte Materialschicht. Beispielsweise besteht die auf dem Werkzeugschaft vorgesehene Werkzeugkrone vollständig aus einem galvanisch aufgewachsenen Material, insbesondere einem zumindest größtenteils Nickel enthaltenen Material, in dem zumindest abschnittsweise während des Galvanikverfahrens Diamantkörner eingebracht wurden. Dadurch kann eine Werkzeugkrone mit hoher mechanischer Belastbarkeit erreicht werden, die zudem mit hoher mechanischer Stabilität direkt und unmittelbar, d.h. ohne Verwendung eines Elements, das beispielsweise an den Werkzeugschaft angelötet wird, über einen galvanisch hergestellten Abschnitt der Werkzeugkrone an den Werkzeugschaft angebunden ist.

Gemäß einer Ausführungsform weist der Werkzeugschaft eine Umfangskonturierung aufweist, mit der die Werkzeugkrone zumindest abschnittsweise stoffschlüssig verbunden ist. Die Umfangskonturierung kann dabei umfangsseitig um den Werkzeugschaft herum verlaufen oder lediglich partiell am Werkzeugschaft vorgesehen sein. Durch die Umfangskonturierung kann ein Formschluss zwischen dem Werkzeugschaft und der Werkzeugkrone erreicht werden, der die mechanische Stabilität des Diamantwerkzeugs zudem erhöht. Insbesondere können durch die Umfangskonturierung ein Verdrehen der Werkzeugkrone gegenüber dem Werkzeugschaft und/oder ein axiales Abziehen der Werkzeugkrone von dem Werkzeugschaft wirksam vermieden werden.

Gemäß einer Ausführungsform weist der Werkzeugschaft in einem vorderen Abschnitt einen rotationsunsymmetrischen Bereich auf, mit dem die Werkzeugkrone zumindest abschnittsweise stoffschlüssig verbunden ist. Unter "vorderer Abschnitt" wird dabei ein Abschnitt des Werkzeugschafts verstanden, der in unmittelbarer örtlicher Nähe zur Werkzeugkrone liegt und zumindest abschnittsweise von der die Werkzeugkrone bildenden Materialschicht überdeckt ist. Unter "rotationsunsymmetrisch" wird ein Bereich verstanden, der bezogen auf die Längsachse des Werkzeugschafts, die auch die Drehachse des Diamantwerkzeugs bildet, nicht rotationssymmetrisch ausgebildet ist. Die Rotationsunsymmetrie kann durch jegliche Konturierung erreicht werden, beispielsweise durch axial oder schräg zur Längsachse verlaufende Kerben oder durch einen polygonen Querschnitt (beispielsweise dreieckig, viereckig, sechseckig bzw. vieleckig) des vorderen Abschnitts des Werkzeugschafts gebildet sein. Durch diese Rotationsunsymmetrie kann ein Verdrehen der Werkzeugkrone gegenüber dem Werkzeugschaft wirksam vermieden werden.

Gemäß einer Ausführungsform weist der Werkzeugschaft eine umfangsseitig um den Werkzeugschaft herum verlaufende Nut oder Kerbe auf, in die die Materialschicht eingreift. Die Nut oder Kerbe verläuft dabei beispielsweise vollumfänglich oder lediglich teilumfänglich um den Werkzeugschaft herum. Durch diese Nut bzw. Kerbe kann ein axiales Abziehen oder Lösen der Werkzeugkrone von dem Werkzeugschaft wirksam vermieden werden.

Gemäß einer Ausführungsform weist der Werkzeugschaft eine Axialbohrung auf, die im Bereich der Werkzeugkrone, insbesondere in einem stirnseitigen Bereich der Werkzeugkrone eine Öffnung bildet. Durch die Axialbohrung kann über die Öffnung in dem Bereich, in dem die Materialbearbeitung stattfindet, gezielt ein Fluid, beispielsweise zur Kühlung abgegeben werden.

Gemäß einem weiteren Aspekt betrifft die Erfindung ein Verfahren zur Herstellung eines Werkzeugs mit einer diamantbesetzten Werkzeugkrone, insbesondere zur Herstellung eines Diamantwerkzeugs gemäß einem der vorhergehenden Ausführungsbeispiele. Das Verfahren umfasst dabei die folgenden Schritte:
- Bereitstellen eines Werkzeugschafts;
- Fixieren eines Trägerelements an einem freien Ende des Werkzeugschafts;
- Aufbringen einer zumindest abschnittsweise mit Diamanten durchsetzten Materialschicht auf das Trägerelement und auf einen an das Trägerelement anschließenden Abschnitt des Werkzeugschafts;
- zumindest teilweises, vorzugsweise vollständiges Entfernen des Trägerelements, so dass durch die mit Diamanten durchsetzte Materialschicht am Werkzeugschaft eine im Querschnitt kreisringförmige Werkzeugkrone gebildet wird, die eine stirnseitige Ausnehmung aufweist.

Das erfindungsgemäße Verfahren hat den technischen Vorteil, dass durch die Verwendung des Trägerelements direkt und unmittelbar eine Werkzeugkrone an dem Werkzeugschaft stoffschlüssig fixiert werden kann, so dass ein mechanisch hochbelastbares Diamantwerkzeug geschaffen wird, das einfach und damit kostengünstig herstellbar ist und darüber hinaus Vorteile hinsichtlich des Rundlaufs aufweist.

Gemäß einem Ausführungsbeispiel des Verfahrens ist das Trägerelement ein zumindest abschnittsweise zylindrisch geformter Körper, der als Träger zum Aufwachsen der zumindest abschnittsweise mit Diamanten durchsetzten Materialschicht dient. In anderen Worten bildet das Trägerelement lediglich eine temporäre Stützstruktur für das Aufwachsen der Materialschicht und wird nach dem Aufwachsen der Materialschicht und einer ggf. vollzogenen Nachbearbeitung wieder entfernt, so dass lediglich die auf dem Trägerelement aufgewachsene Materialschicht bestehen bleibt.

Gemäß einem Ausführungsbeispiel wird das Trägerelement kraftschlüssig und/oder stoffschlüssig an dem Werkzeugschaft fixiert. Vorzugsweise erfolgt die Fixierung ohne Wärmeeinwirkung, beispielsweise durch Verpressen und/oder Verkleben, um negative Auswirkungen auf die Materialeigenschaften des Werkzeugschafts zu vermeiden.

Gemäß einem Ausführungsbeispiel weist das Trägerelement einen Vorsprung auf, der zum Fixieren des Trägerelements an dem Werkzeugschaft in eine Ausnehmung des Werkzeugschafts eingesetzt, insbesondere eingepresst wird. Die Ausnehmung des Werkzeugschafts kann insbesondere eine Axialbohrung sein, durch die beim Einsatz des Diamantwerkzeugs ein Fluid durchleitbar ist. Durch die kraftschlüssige Verbindung des Trägerelements mit dem Werkzeugschaft, die beispielsweise zusätzlich durch Verkleben gesichert sein kann, wird eine für das Aufwachsen der Materialschicht mechanisch stabile Verbindung zwischen dem Werkzeugschaft und dem Trägerelement erreicht.

Gemäß einem Ausführungsbeispiel wird die zumindest abschnittsweise mit Diamanten durchsetzte Materialschicht mittels eines Galvanikprozesses auf das Trägerelement und abschnittsweise auf den Werkzeugschaft aufgebracht. Dadurch bildet die Materialschicht mit einem ersten Abschnitt die stoffschlüssige Anbindung der Werkzeugkrone an den Werkzeugschaft und mit einem zweiten Abschnitt, der freiendseitig über den Werkzeugschaft übersteht, einen mit Diamanten durchsetzten Werkzeugabschnitt, mittels dem die Materialbearbeitung erfolgt. Dadurch kann eine einstückige Werkzeugkrone geschaffen werden, die stoffschlüssig an dem Werkzeugschaft fixiert ist und abschnittsweise hülsenartig gegenüber dem Werkzeugschaft vorsteht, um mit diesem Abschnitt die Materialbearbeitung zu ermöglichen.

Gemäß einem Ausführungsbeispiel sind an dem an das Trägerelement anschließenden Abschnitt des Werkzeugschafts eine oder mehrere Konturierungen vorgesehen, die von der zumindest abschnittsweise mit Diamanten durchsetzten Materialschicht überdeckt werden. Durch die Konturierungen kann ein Verdrehen der Werkzeugkrone gegenüber dem Werkzeugschaft und/oder ein axiales Abziehen der Werkzeugkrone von dem Werkzeugschaft wirksam vermieden werden.

Gemäß einem Ausführungsbeispiel erfolgt das Entfernen des Trägerelements durch eine stirnseitige, spanende Materialbearbeitung. Vorzugsweise wird das Trägerelement durch stirnseitiges Bohren oder Ausdrehen entfernt, so dass lediglich die auf dem Trägerelement aufgebrachte Materialschicht bestehen bleibt, d.h. das Trägerelement wird vollständig oder im Wesentlichen vollständig entfernt. Dadurch kann das Gewicht des Diamantwerkzeugs reduziert und der Rundlauf erhöht werden.

Unter "mit Diamanten durchsetzte Nickelschicht" bzw. "Nickel-Diamant-Schicht" im Sinne der Erfindung wird eine Materialschicht verstanden, die als die Diamanten umschließendes bzw. einbindendes Material überwiegend Nickel enthält, jedoch auch weitere Zusätze enthalten kann, beispielsweise Zusätze zur Erreichung eines gewünschten Härtegrades der Materialschicht etc.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und grob schematisch ein Diamantwerkzeug in einer seitlichen Darstellung;
- Fig. 2: beispielhaft und grob schematisch ein Diamantwerkzeug in einer perspektivischen, vorderseitigen Ansicht auf die Werkzeugkrone;
- Fig. 3: beispielhaft und grob schematisch der Werkzeugschaft und ein am Werkzeugschaft anzuordnendes Trägerelement in einer seitlichen Darstellung;
- Fig. 4: beispielhaft und grob schematisch ein in einer Haltevorrichtung freiendseitig eingespannter Werkzeugschaft und ein am Werkzeugschaft angeordnetes Trägerelement in einer seitlichen Darstellung; und
- Fig. 5: beispielhaft und grob schematisch ein Galvanikbecken zur galvanischen Belegung des Trägerelements und Werkzeugschafts mit einer abschnittsweise mit Diamanten durchsetzten Materialschicht.

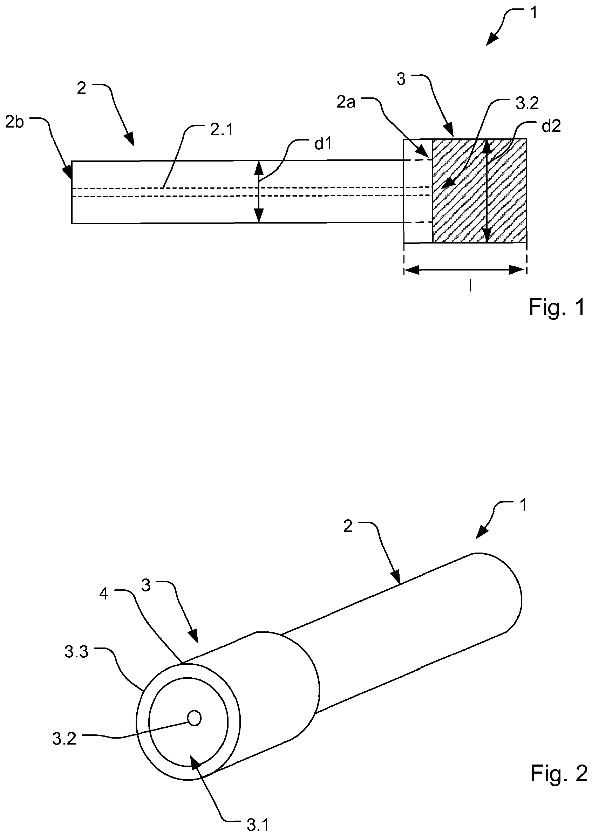

Figuren 1 und 2 zeigen beispielhaft und grob schematisch ein Diamantwerkzeug 1. Das Diamantwerkzeug 1 umfasst einen Werkzeugschaft 2 und eine Werkzeugkrone 3, die einen Diamantenbesatz aufweist. Das Diamantwerkzeug 1 kann insbesondere ein Diamant-Hohlfräser sein, d.h. die Werkzeugkrone 3 weist - wie insbesondere in Fig. 2 ersichtlich - eine stirnseitige Ausnehmung 3.1 auf, die durch einen ringartig ausgebildeten Werkzeugkronenabschnitt 3.3 umfangsseitig begrenzt ist.

Der Werkzeugschaft 2 kann insbesondere aus einem Hartmetall gefertigt sein, beispielsweise der Hartmetallsorte K-40UF, oder anderen Hartmetallsorten, die für den Einsatz bei Präzisions- und Zerspanungswerkzeugen geeignet sind.

Zur Zuführung eines Fluids bei der Werkstückbearbeitung weist der Werkzeugschaft 2 eine Axialbohrung 2.1 auf, die entlang der Mittellängsachse des Werkzeugschafts verläuft. Im Bereich der Ausnehmung 3.1 ist eine Öffnung 3.2 vorgesehen, über die das Fluid stirnseitig austreten kann, beispielsweise um eine Kühlung an der zu bearbeitenden Werkstückoberfläche zu bewirken.

Wie insbesondere in Fig. 1 ersichtlich, kann der Werkzeugschaft 2 einen kleineren Durchmesser d1 aufweisen als die Werkzeugkrone 3 (Durchmesser d2, d1 < d2).

Die Werkzeugkrone 3 ist, wie nachfolgend näher beschrieben, eine durch ein galvanisches Verfahren hergestellte Werkzeugkrone, die unmittelbar mit dem Werkzeugschaft 2 verbunden ist, d.h. eine abgeschiedene Materialschicht 4, insbesondere galvanisch abgeschiedenes Metall, das die Werkzeugkrone 3 bildet und zumindest abschnittsweise mit Diamanten durchsetzt sein kann, umgibt zumindest abschnittsweise den Werkzeugschaft 2 und führt damit zu einer festen Verbindung zwischen Werkzeugschaft 2 und Werkzeugkrone 3. Der mit Diamanten durchsetzte Teil der Werkzeugkrone 3 ist in Fig. 1 schraffiert gekennzeichnet, der die Verbindung mit dem Werkzeugschaft 2 herstellende Teil der Werkzeugkrone 3 nicht schraffiert. Es versteht sich, dass auch der die Verbindung mit dem Werkzeugschaft 2 herstellende Teil der Werkzeugkrone 3 zumindest abschnittsweise mit Diamanten durchsetzt sein kann.

Die Werkzeugkrone 3 wird vorzugsweise durch galvanisches Abscheiden von Nickelschichten und Einbetten von Diamanten in diese Nickelschichten gebildet. Dadurch wird eine hochbelastbare Werkzeugkrone 3 des Diamantwerkzeugs 1 erhalten.

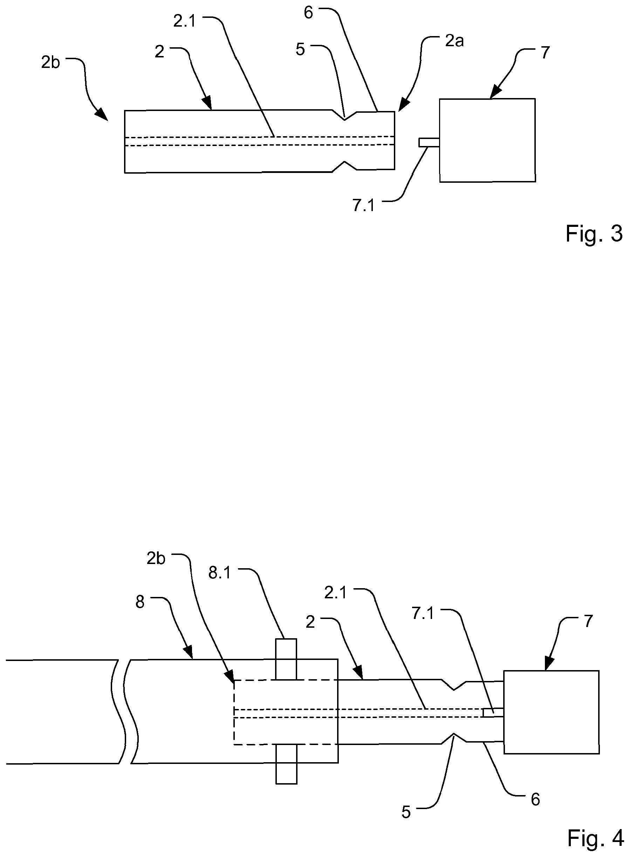

Um die Ausnehmung 3.1 an der Werkzeugkrone 3 ausbilden zu können, wird, wie in Fig. 3 und 4 ersichtlich, ein Trägerelement 7 verwendet. Das Trägerelement 7 dient vorzugsweise als Träger für das galvanische Aufwachsen eines umfangsseitigen Abschnitts der Werkzeugkrone 3. Das Trägerelement 7 wird nachfolgend zumindest teilweise entfernt, so dass stirnseitig lediglich ein galvanisch aufgewachsener, von Diamanten durchsetzter, ringartiger Werkzeugkronenabschnitt 3.3 bestehen bleibt.

Fig. 3 zeigt den Werkzeugschaft 2 und das Trägerelement 7 in einer Explosionsdarstellung.

Das Trägerelement 7 ist dazu ausgebildet, stirnseitig mit einem freien Ende 2a des Werkzeugschafts 2 verbunden zu werden. Die Verbindung kann dabei kraftschlüssig und/oder stoffschlüssig erfolgen. Im gezeigten Ausführungsbeispiel weist das Trägerelement 7 einen Vorsprung 7.1 auf, über den eine kraftschlüssige Verbindung mit dem Werkzeugschaft 2 herstellbar ist. Der Vorsprung 7.1 ist beispielsweise als Übermaßpassung in das freie Ende der Axialbohrung 2.1 einpressbar, so dass das Trägerelement 7 über den Vorsprung 7.1 an dem Werkzeugschaft 2 fixiert ist. Alternativ oder zusätzlich kann eine stoffschlüssige Verbindung zwischen dem Werkzeugschaft 2 und dem Trägerelement 7 hergestellt werden, beispielsweise durch eine Verklebung (insbesondere Zweikomponenten-Kleber).

Das Trägerelement 7 kann aus jeglichen durch spanende Fertigung bearbeitbaren Materialien, insbesondere Metall, Stahl, Messing etc. gebildet werden.

Um die galvanisch hergestellte Werkzeugkrone 3 in verbesserter Weise an dem Werkzeugschaft 2 fixieren zu können, weist der Werkzeugschaft 2 an seinem am freien Ende 2a anschließenden Bereich eine Umfangskonturierung auf. Die Umfangskonturierung weist vorzugsweise einen rotationsunsymmetrischen Bereich 6 auf, in dem der Werkzeugschaft 2 beispielsweise einen polygonen Querschnitt hat. Der polygone Querschnitt kann beispielsweise eine vieleckige Form, beispielsweise eine Sechseckform haben. Durch den rotationsunsymmetrischen Bereich 6 kann ein Verdrehen der Werkzeugkrone 3 gegenüber dem Werkzeugschaft 2 wirksam verhindert werden.

Zudem kann die Umfangskonturierung eine Nut 5 umfassen. Diese Nut kann bezogen auf das freie Ende 2a des Werkzeugschafts 2 an den rotationsunsymmetrischen Bereich 6 anschließen oder alternativ vor dem rotationsunsymmetrischen Bereich 6 zu liegen kommen. Die Nut 5 kann lediglich in Teilbereichen umfangsseitig vorgesehen sein oder vollumfänglich um den Werkzeugschaft 2 herum verlaufen. Durch die Nut 5 kann ein unerwünschtes axiales Abziehen oder Ablösen der Werkzeugkrone 3 vom Werkzeugschaft 2 vermieden werden.

Fig. 4 zeigt das am Werkzeugschaft 2 angeordnete Trägerelement 7, das für das galvanische Abscheiden der Nickel-Diamantschicht der Werkzeugkrone 3 mit dem freien Ende 2b in eine Haltevorrichtung 8 eingebracht ist. Die Fixierung kann eine klemmende Fixierung sein, beispielsweise mittels radial auf den Werkzeugschaft 2 zugestellter Schrauben 8.1.

Nachfolgend wird ein Verfahren zur Herstellung eines Diamantwerkzeugs 1 im Detail näher beschrieben.

Zunächst wird ein Werkzeugschaft 2, vorzugsweise mit der vorbeschriebenen Umfangskonturierung in Form der Nut 5 und/oder dem rotationsunsymmetrischen Bereich 6 zur Verfügung gestellt. Zudem wird ein Trägerelement 7 zur Verfügung gestellt, das über eine stoff- und/oder kraftschlüssige Verbindung mit dem Werkzeugschaft 2 verbunden wird.

Die vom freien Ende des Werkzeugschafts 2 abstehende Länge I des Trägerelements 7 bildet beispielsweise die spätere Bohr- oder Frästiefe des Diamantwerkzeugs 1.

Nach dem Fixieren des Trägerelements 7 an dem Werkzeugschaft 2 kann das Trägerelement 7 umfangsseitig nachbearbeitet werden, beispielsweise durch Abdrehen auf einen gewünschten Außendurchmesser. Dieser Außendurchmesser des Trägerelements 7 legt vorzugsweise den Innendurchmesser des fertiggestellten Diamantwerkzeugs 1 im Bereich der Ausnehmung 3.1 der Werkzeugkrone 3 fest.

Vorzugsweise kann an der vom Werkzeugschaft 2 abgewandten Stirnseite des Trägerelements 7 eine Zentrierung eingebracht werden, mittels der sich in einem späteren Verfahrensschritt die Werkzeugkrone 3 ausrichten und außenseitig rundschleifen lässt.

Anschließend kann der Werkzeugschaft 2 mit dem daran vorgesehenen Trägerelement 7 in die Haltevorrichtung 8 eingebracht und darin mittels des freien Endes 2b fixiert werden (s. Fig. 4), um anschließend den galvanischen Prozess vollziehen zu können.

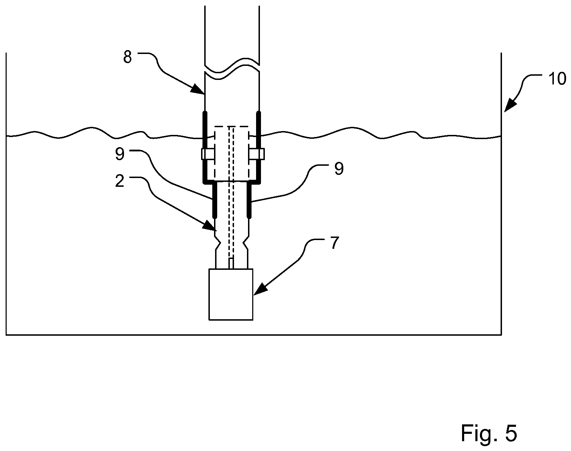

Zum Vollziehen des galvanischen Prozesses kann es vorteilhaft sein, bestimmte Bereiche, die mittels des Galvanikprozesses nicht belegt werden sollen, abzuschirmen. Dieses Abschirmen kann mittels einer Abdeckschicht 9 erfolgen, die vorzugsweise eine elektrische Isolationsschicht bildet, so dass in den Bereichen, in denen die Abdeckschicht 9 vorhanden ist, keine galvanische Abscheidung durch den elektrolytischen Galvanikprozess erfolgt. Wie in Fig. 5 ersichtlich, kann die Abdeckschicht 9 zumindest teilweise die Haltevorrichtung 8 und teilweise den Werkzeugschaft 2 abdecken. Insbesondere endet die Abdeckschicht 9 vor der Nut 5 bzw. dem rotationsunsymmetrischen Bereich 6, um die diese Umfangskonturierungen sowie das Trägerelement 7 mit der Materialschicht 4 (vorzugsweise bestehend aus Nickel) galvanisch belegen zu können.

Vorzugsweise kann auch die dem Werkzeugschaft 2 gegenüberliegende Stirnseite des Trägerelements 7 eine Abdeckschicht 9 aufweisen, um nach dem Galvanikprozess ein Freilegen dieser Stirnseite des Trägerelements 7 zu erleichtern.

Vor dem Galvanikprozess können beispielsweise Vorbereitungsprozesse vollzogen werden, insbesondere Reinigungsprozesse, Entfettungsprozesse und/oder Aktivierungsprozesse.

Anschließend erfolgt der Aufbau einer von Diamanten durchsetzten Materialschicht, insbesondere einer Nickel-Diamantschicht mittels eines Galvanikprozesses.

Fig. 5 zeigt beispielhaft einen Aufbau zur Durchführung des Galvanikprozesses. In einem Behälter 10 sind eine Nickel enthaltende Lösung (vorzugsweise mit die nötige Härte bewirkenden Zusatzstoffen) vorgesehen. Dabei wird die den Werkzeugschaft 2 samt Trägerelement 7 fixierende Haltevorrichtung 8 in das Nickelbad eingetaucht. Dieser Prozess ist insbesondere ein elektrolytischer Prozess, bei dem die in der Lösung enthaltenen Ionen, insbesondere Metallionen, durch ein elektrisches Feld auf das zu belegende Trägerelement 7 bzw. den daran anschließenden Abschnitt des Werkzeugschafts 2 gerichtet werden.

Der Galvanikprozess wird solange vollzogen, bis an dem Trägerelement 7 eine gewünschte Schichtdicke sicher erreicht ist. Vorzugsweise wird die Schichtdicke größer gewählt, so dass auch nach einem anschließenden Außenrundschleifen die Werkzeugkrone 3 die gewünschte Schichtdicke der Nickel-Diamant-Schicht behält.

Nach dem Galvanikprozess erfolgt vorzugsweise ein Freilegen der dem Werkzeugschaft 2 gegenüberliegenden Stirnseite des Trägerelements 7. Insbesondere wird die Nickel-Diamant-Schicht stirnseitig entfernt, um die im Trägerelement 7 vorgesehene Zentrierung freizulegen. Diese Zentrierung ist vorteilhaft für das Außenrundschleifen der Werkzeugkrone 3.

Nach dem Herauslösen des Werkzeugschafts 2 aus der Haltevorrichtung 8 und ggf. säubern erfolgt ein Schleifprozess, bei dem die Werkzeugkrone 3 auf den gewünschten Außendurchmesser geschliffen wird. Hierzu wird der Werkzeugschaft 2 vorzugsweise in eine Spannvorrichtung, insbesondere eine Präzisionsspannzange eingespannt, am gegenüberliegenden Ende mittels der Zentrierspitze eines Reitstocks an der freigelegten Zentrierung des Trägerelements 7 zentriert und dann außenseitig rundgeschliffen.

Anschließend wird das Trägerelement 7 zumindest teilweise, vorzugsweise vollständig entfernt. Dies erfolgt vorzugsweise durch spanende Fertigung wie Bohren oder Drehen, so dass nach dem Entfernen des Trägerelements 7 an der Stirnseite der Werkzeugkrone 3 eine Ausnehmung 3.1 entsteht, die umfangsseitig durch einen Werkzeugkronenabschnitt 3.3 aus Nickel-Diamant-Material begrenzt wird. In anderen Worten bildet die Werkzeugkrone 3 damit einen Hohlfräser, bei dem die den Hohlfräser bildende kreisringförmige Wandung (Werkzeugkronenabschnitt 3.3) lediglich aus dem galvanisch aufgewachsenen Nickel-Diamant-Material besteht.

Zudem kann die Axialbohrung 2.1 stirnseitig geöffnet werden, sofern diese noch durch den Vorsprung 7.1 des Trägerelements 7 verschlossen ist. Anschließend kann ein Abdrehen der Nickelschicht im Bereich hinter der Nut 5, d.h. in dem von der Werkzeugkrone 3 abgewandten Bereich der hinter der Umfangskonturierung erfolgen.

Zuletzt kann ein Abrichten und Planen der Werkzeugkrone 3, ein innenseitiges Schärfen der Diamanten an der freigelegten Innenseite der stirnseitigen, kreisringförmigen Wandung etc. sowie ein Prüfen und Kontrollieren des Diamantwerkzeugs (beispielsweise hinsichtlich Rundlauf, Härte der Nickel-Diamant-Schicht, Schwingfrequenz etc.) erfolgen.

### Bezugszeichenliste

- 1: Diamantwerkzeug
- 2: Werkzeugschaft
- 2a: freies Ende
- 2b: freies Ende
- 2.1: Axialbohrung
- 3: Werkzeug krone
- 3.1: Ausnehmung
- 3.2: Öffnung
- 3.3: Werkzeugkronenabschnitt
- 4: Materialschicht
- 5: Nut
- 6: rotationsunsymmetrischer Bereich
- 7: Trägerelement
- 7.1: Vorsprung
- 8: Haltevorrichtung
- 8.1: Schrauben
- 9: Abdeckschicht
- 10: Behälter

- d1: Durchmesser Werkzeugschaft
- d2: Durchmesser Werkzeugkrone
- I: Länge

## Patentansprüche

1. Diamantwerkzeug umfassend einen Werkzeugschaft (2) und eine auf dem Werkzeugschaft (2) fixierte Werkzeugkrone (3), die durch eine zumindest abschnittsweise mit Diamanten durchsetzte Materialschicht (4) gebildet wird, wobei die Materialschicht (4) unmittelbar mit dem Werkzeugschaft (2) stoffschlüssig verbunden ist und wobei die Werkzeugkrone (3) stirnseitig eine Ausnehmung (3.1) aufweist, so dass die Werkzeugkrone (3) im Bereich des freien Endes im Querschnitt kreisringförmig ausgebildet ist, wobei die Werkzeugkrone (3) einen Hohlfräser bildet, wobei eine den Hohlfräser bildende kreisringförmige Wandung lediglich aus einem galvanisch aufgewachsenen Nickel-Diamant-Material besteht.

2. Diamantwerkzeug nach Anspruch 1, **dadurch gekennzeichnet, dass** die Werkzeugkrone (3) zumindest abschnittsweise freiendseitig über den Werkzeugschaft (2) übersteht.

3. Diamantwerkzeug nach Anspruch 1 oder 2, **dadurch gekennzeichnet, dass** die zumindest abschnittsweise mit Diamanten durchsetzte Materialschicht (4) eine Diamanten enthaltende Nickelschicht ist oder zumindest anteilig Nickel enthält.

4. Diamantwerkzeug nach einem der vorhergehenden Ansprüche, **dadurch gekennzeichnet, dass** die zumindest abschnittsweise mit Diamanten durchsetzte Materialschicht (4) eine durch ein Galvanikverfahren aufgebrachte Materialschicht ist.

5. Diamantwerkzeug nach einem der vorhergehenden Ansprüche, **dadurch gekennzeichnet, dass** der Werkzeugschaft (2) eine Umfangskonturierung (5, 6) aufweist, mit der die Werkzeugkrone (3) zumindest abschnittsweise stoffschlüssig verbunden ist.

6. Diamantwerkzeug nach einem der vorhergehenden Ansprüche, **dadurch gekennzeichnet, dass** der Werkzeugschaft (2) in einem vorderen Abschnitt einen rotationsunsymmetrischen Bereich (6) aufweist, mit dem die Werkzeugkrone (3) zumindest abschnittsweise stoffschlüssig verbunden ist.

7. Diamantwerkzeug nach einem der vorhergehenden Ansprüche, **dadurch gekennzeichnet, dass** der Werkzeugschaft (2) eine umfangsseitige Nut oder Kerbe (5) aufweist, in die die zumindest abschnittsweise mit Diamanten durchsetzte Materialschicht (4) eingreift.

8. Diamantwerkzeug nach einem der vorhergehenden Ansprüche, **dadurch gekennzeichnet, dass** der Werkzeugschaft (2) eine Axialbohrung (2.1) aufweist, die im Bereich der Werkzeugkrone (3) eine Öffnung (3.2) bildet.

9. Verfahren zur Herstellung eines Werkzeugs mit einer diamantbesetzten Werkzeugkrone (3), umfassend folgende Schritte:
- Bereitstellen eines Werkzeugschafts (2);
- Fixieren eines Trägerelements (7) an einem freien Ende des Werkzeugschafts (2);
- Aufbringen einer zumindest abschnittsweise mit Diamanten durchsetzten Materialschicht (4) auf das Trägerelement (7) und auf einen an das Trägerelement (7) anschließenden Abschnitt des Werkzeugschafts (2);
- zumindest teilweises Entfernen des Trägerelements (7), so dass durch die mit Diamanten durchsetzte Materialschicht (4) eine im Querschnitt kreisringförmige Werkzeugkrone (3) gebildet wird, die eine stirnseitige Ausnehmung (3.1) aufweist.

10. Verfahren nach Anspruch 9, **dadurch gekennzeichnet, dass** das Trägerelement (7) ein zumindest abschnittsweise zylindrisch geformter Körper ist, der als Träger zum Aufwachsen der zumindest abschnittsweise mit Diamanten durchsetzten Materialschicht (4) dient.

11. Verfahren nach Anspruch 9 oder 10, **dadurch gekennzeichnet, dass** das Trägerelement (7) kraftschlüssig und/oder stoffschlüssig an dem Werkzeugschaft (2) fixiert wird.

12. Verfahren nach einem der Ansprüche 9 bis 11, **dadurch gekennzeichnet, dass** das Trägerelement (7) einen Vorsprung (7.1) aufweist, der zum Fixieren des Trägerelements (7) an dem Werkzeugschaft (2) in eine Ausnehmung des Werkzeugschafts (2) eingesetzt, insbesondere eingepresst wird.

13. Verfahren nach einem der Ansprüche 9 bis 12, **dadurch gekennzeichnet, dass** die Materialschicht (4) mittels eines Galvanikprozesses auf das Trägerelement (7) und abschnittsweise auf den Werkzeugschaft (2) aufgebracht wird.

14. Verfahren nach einem der Ansprüche 9 bis 13, **dadurch gekennzeichnet, dass** an dem an das Trägerelement (7) anschließenden Abschnitt des Werkzeugschaft (2) eine oder mehrere Konturierungen (5, 6) vorgesehen sind, die von der Materialschicht (4) überdeckt werden.

15. Verfahren nach einem der Ansprüche 9 bis 14, **dadurch gekennzeichnet, dass** das Trägerelement (7) vollständig oder im Wesentlichen vollständig entfernt wird.

## Claims

1. A diamond tool comprising a tool shank (2) and a tool head (3) fixed on said tool shank (2) and formed by a layer of material (4) interspersed with diamonds at least in sections, said layer of material (4) being directly connected to said tool shank (2) by an integral bond, wherein said tool head (3) has a recess (3.1) on the front side so that said tool head (3) has an annular cross-section in the area of the free end, wherein said tool head (3) forms a hollow milling cutter, wherein an annular wall forming the hollow milling cutter consists only of a nickel-diamond material grown by electroplating.

2. The diamond tool according to claim 1, **characterized in that** said tool head (3) protrudes beyond said tool shank (2) at least in sections on the free-end side.

3. The diamond tool according to claim 1 or 2, **characterized in that** said layer of material (4) interspersed with diamonds at least in sections is a nickel layer containing diamonds or at least partially contains nickel.

4. The diamond tool according to one of the preceding claims, **characterized in that** said layer of material (4) interspersed with diamonds at least in sections is a layer of material applied by an electroplating process.

5. The diamond tool according to one of the preceding claims, **characterized in that** said tool shank (2) has a circumferential contouring (5, 6) to which said tool head (3) is integrally bonded at least in sections.

6. The diamond tool according to one of the preceding claims, **characterized in that** said tool shank (2) has, in a front portion, a rotationally asymmetrical area (6) to which said tool head (3) is integrally bonded at least in sections.

7. The diamond tool according to one of the preceding claims, **characterized in that** said tool shank (2) has a circumferential groove or notch (5) into which said layer of material (4) interspersed with diamonds at least in sections engages.

8. The diamond tool according to one of the preceding claims, **characterized in that** said tool shank (2) has an axial bore (2.1) which forms an opening (3.2) in the area of said tool head (3).

9. A method for producing a tool with a diamond-studded tool crown (3), comprising the steps of:
- providing a tool shank (2);
- fixing a support element (7) to a free end of said tool shank (2);
- applying a layer of material (4) interspersed with diamonds at least in sections to said support element (7) and to a portion of said tool shank (2) adjoining said support element (7);
- at least partially removing said support element (7), so that said layer of material (4) interspersed with diamonds forms a tool head (3) which is annular in cross-section and has a front-side recess (3.1).

10. The method according to claim 9, **characterized in that** said support element (7) is a body which is cylindrical in shape at least in sections and which is used as a support for growing said layer of material (4) interspersed with diamonds at least in sections.

11. The method according to claim 9 or 10, **characterized in that** said support element (7) is fixed to said tool shank (2) by a force-fit and/or by an integral bond.

12. The method according to one of claims 9 to 11, **characterized in that** said support element (7) has a projection (7.1) that is inserted, in particular pressed, into a recess of said tool shank (2) in order to fix said support element (7) to said tool shank (2).

13. The method according to one of claims 9 to 12, **characterized in that** said layer of material (4) is applied by means of an electroplating process to said support element (7) and in sections to said tool shank (2).

14. The method according to one of claims 9 to 13, **characterized in that** one or more contours (5, 6) which are covered by said layer of material (4) are provided on the portion of said tool shank (2) that adjoins said support element (7).

15. The method according to one of claims 9 to 14, **characterized in that** said support element (7) is removed completely or substantially completely.

## Revendications

1. Outil diamanté comprenant une tige d'outil (2) et une couronne d'outil (3) fixée sur la tige d'outil (2) et formée par une couche de matériau (4) au moins localement chargée de diamants, la couche de matériau (4) étant reliée directement à la tige d'outil (2) par coopération de matière et la couronne d'outil (3) présentant sur sa face frontale un évidement (3.1), de sorte que la couronne d'outil (3) est réalisée en forme d'anneau circulaire en section transversale dans la zone de l'extrémité libre, la couronne d'outil (3) formant une fraise creuse, une paroi en forme d'anneau circulaire formant la fraise creuse étant constituée uniquement d'un matériau nickel-diamant obtenu par croissance galvanique.

2. Outil diamanté selon la revendication 1,
**caractérisé en ce que** la couronne d'outil (3) dépasse au moins localement de la tige d'outil (2), du côté de l'extrémité libre.

3. Outil diamanté selon la revendication 1 ou 2,
**caractérisé en ce que** la couche de matériau (4) au moins localement chargée de diamants est une couche de nickel contenant des diamants ou contient au moins proportionnellement du nickel.

4. Outil diamanté selon l'une des revendications précédentes,
**caractérisé en ce que** la couche de matériau (4) au moins localement chargée de diamants est une couche de matériau appliquée par un procédé de galvanisation.

5. Outil diamanté selon l'une des revendications précédentes,
**caractérisé en ce que** la tige d'outil (2) présente un contour périphérique (5, 6) avec lequel la couronne d'outil (3) est reliée au moins localement par coopération de matière.

6. Outil diamanté selon l'une des revendications précédentes,
**caractérisé en ce que** la tige d'outil (2) présente, dans une portion avant, une zone (6) non à symétrique de révolution, à laquelle la couronne d'outil (3) est reliée au moins localement par coopération de matière.

7. Outil diamanté selon l'une des revendications précédentes,
**caractérisé en ce que** la tige d'outil (2) présente une rainure ou une encoche (5) périphérique dans laquelle s'engage la couche de matériau (4) au moins localement chargée de diamants.

8. Outil diamanté selon l'une des revendications précédentes,
**caractérisé en ce que** la tige d'outil (2) présente un alésage axial (2.1) qui forme une ouverture (3.2) dans la zone de la couronne d'outil (3).

9. Procédé de fabrication d'un outil avec une couronne d'outil diamantée (3), comprenant les étapes suivantes consistant à :
- fournir une tige d'outil (2) ;
- fixer un élément porteur (7) à une extrémité libre de la tige d'outil (2) ;
- appliquer une couche de matériau (4) au moins localement chargée de diamants sur l'élément porteur (7) et sur une portion de la tige d'outil (2) se raccordant à l'élément porteur (7) ;
- retirer au moins partiellement l'élément porteur (7), de sorte que la couche de matériau (4) chargée de diamants forme une couronne d'outil (3) en forme d'anneau circulaire en section transversale, qui présente un évidement frontal (3.1).

10. Procédé selon la revendication 9,
**caractérisé en ce que** l'élément porteur (7) est un corps de forme au moins localement cylindrique, qui sert de support pour la croissance de la couche de matériau (4) au moins localement chargée de diamants.

11. Procédé selon la revendication 9 ou 10,
**caractérisé en ce que** l'élément porteur (7) est fixé par coopération de force et/ou par coopération de matière sur la tige d'outil (2).

12. Procédé selon l'une des revendications 9 à 11,
**caractérisé en ce que** l'élément porteur (7) présente une saillie (7.1) qui est insérée, en particulier enfoncée, dans un évidement de la tige d'outil (2) pour fixer l'élément porteur (7) sur la tige d'outil (2).

13. Procédé selon l'une des revendications 9 à 12,
**caractérisé en ce que** la couche de matériau (4) est appliquée sur l'élément porteur (7) et localement sur la tige d'outil (2) au moyen d'un processus de galvanisation.

14. Procédé selon l'une des revendications 9 à 13,
**caractérisé en ce qu'**un ou plusieurs contours (5, 6) sont prévus sur la portion de la tige d'outil (2) se raccordant à l'élément porteur (7), lesquels sont recouverts par la couche de matériau (4).

15. Procédé selon l'une des revendications 9 à 14,
**caractérisé en ce que** l'élément porteur (7) est retiré complètement ou sensiblement complètement.
